(19) Europäisches Patentamt
European Patent Office
Office européen des brevets

(11) **EP 1 394 985 A1**

(12) **EUROPÄISCHE PATENTANMELDUNG**

(43) Veröffentlichungstag:
**03.03.2004 Patentblatt 2004/10**

(51) Int Cl.[7]: **H04L 12/26**, H04L 12/56, H04L 29/14

(21) Anmeldenummer: **02019297.7**

(22) Anmeldetag: **28.08.2002**

(84) Benannte Vertragsstaaten:
**AT BE BG CH CY CZ DE DK EE ES FI FR GB GR IE IT LI LU MC NL PT SE SK TR**
Benannte Erstreckungsstaaten:
**AL LT LV MK RO SI**

(71) Anmelder: **SIEMENS AKTIENGESELLSCHAFT 80333 München (DE)**

(72) Erfinder:
• **Arnold, Robert, Dr.**
  **09423 Gelenau (DE)**

• **Hertlein, Thomas, Dr.**
  **81477 München (DE)**
• **Koepp, Joerg**
  **81476 München (DE)**
• **Leitol, Stefan**
  **81475 München (DE)**
• **Schumacher, Rainer**
  **81477 München (DE)**
• **Stemplinger, Robert**
  **81377 München (DE)**

(54) **Testverfahren für Nachrichtenpfade in Kommunikationsnetzen sowie Netzelement**

(57) Testverfahren für Nachrichtenpfade in Kommunikationsnetzen sowie Netzelement

Hoch zuverlässige Kommunikationssysteme erfordern den Einsatz redundanter Nachrichtenpfade, so daß eine Störung eines einzelnen Nachrichtenpfades nicht zu Einschränkungen in der Kommunikation führt. Für Kommunikationssysteme mit Echtzeit-Anforderungen sind sehr schnelle Umschaltzeiten von einem gestörten Nachrichtenpfad auf einen Ersatz-Nachrichtenpfad von großer Bedeutung. Ein in der Praxis sehr häufig anzutreffendes Kommunikationssystem besteht aus einem oder mehreren Hosts bzw. Service-Plattformen, die über ein redundantes lokales Netz (LAN) und zwei Gateways (G0, G1) an ein IP-Netzwerk (IP) angeschlossen sind. Das erfindungsgemäße Testverfahren liefert eine schnelle Erkennung gestörter Nachrichtenpfade. Für eine ausgewählte Netztopologie werden vorteilhafte Umschaltstrategien vorgesehen. Das erfindungsgemäße Testverfahren wird durch den Host initiiert, indem IP-Testnachrichten über das LAN an die Gateways (G0, G1) gesendet werden, wobei die Empfänger-IP-Adresse dieser Testnachrichten der IP-Adresse des Hosts entspricht. Die über das LAN empfangenen Testnachrichten werden bei den Gateways gespiegelt und an den Host zurückgesendet. Vorteilhaft ist dabei lediglich die Schnittstellenbaugruppe der Gateways involviert, nicht jedoch der Vermittlungsprozessor, wodurch eine hohe Frequenz der Testnachrichten ermöglicht wird, ohne daß dadurch Last im Gateway erzeugt wird.

FIG 2A

EP 1 394 985 A1

# FIG 2B

|       |       |       |       |
|-------|-------|-------|-------|
| IF0   | IF1   | G0    | G1    |
| (ACT) | (STB) | (Default) | (Ersatz) |

Testnachricht

100 ms

Testnachricht

100 ms

Testnachricht

**Beschreibung**

Hoch zuverlässige Kommunikationssysteme erfordern den Einsatz redundanter Nachrichtenpfade, so daß eine Störung eines einzelnen Nachrichtenpfades nicht zu Einschränkungen in der Kommunikation führt. Die Redundanz der Nachrichtenpfade, d.h. für jeden Nachrichtenpfad existiert zumindest ein Ersatz-Nachrichtenpfad, auf den im Störungsfall umgeschaltet werden kann, muß dabei von den Service-Plattformen bzw. Hosts wie auch von dem Kommunikationssystem selbst, d.h. durch dessen Elemente, z.B. Switches und Router, und dessen Struktur, unterstützt werden.

Für Kommunikationssysteme mit Echtzeit-Anforderungen, beispielsweise im Fall von Übertragung von Sprache, sind außerdem auch sehr schnelle Umschaltzeiten von einem gestörten Nachrichtenpfad auf einen Ersatz-Nachrichtenpfad von großer Bedeutung, um die negativen Auswirkungen auf den Betrieb bei Ausfall eines Nachrichtenpfades auf ein Minimum zu begrenzen.

Zu berücksichtigende Störungen umfassen Totalausfälle und/oder Teilausfälle in einzelnen Elementen des Kommunikationssystems, z.B. Service-Plattform, Switches, Router, und Ausfälle der Verbindungen zwischen den einzelnen Elementen.

Ein in der Praxis sehr häufig anzutreffendes Kommunikationssystem besteht aus einem oder mehreren Hosts bzw. Service-Plattformen, die über ein redundantes lokales Netz LAN (LAN = Local Area Network) und zwei Gateways an ein IP-Netzwerk (IP = Internet Protocol) angeschlossen sind.

Zum Überprüfen von Nachrichtenpfaden auf Störungsfreiheit sind folgende Möglichkeiten bekannt:

IP Netzwerke (Layer 3 Switching):

Für die logische Protokollebene der IP Netzwerke existieren standardisierte Routing-Protokolle wie z.B. Open Shortest Path First OSPF, Routing Information Protocol RIP, Border Gateway Protocol BGP, mittels welcher Ausfälle eines Pfades erkannt und an andere Netzelemente weitergemeldet werden können, um so eine Umschaltung auf alternative Routen einzuleiten. Die Topologie der IP Netzwerke spielt dabei eine unbedeutende Rolle. Die Unterbrechung eines Nachrichtenpfades, der direkt an einem Netzelement angeschlossen ist, wird in der Regel sehr schnell erkannt, z.B. innerhalb von 60 ms, und die Umschaltung ist typischerweise nach einigen Sekunden abgeschlossen, z.B. innerhalb von 1..4 s.

Die Unterbrechung eines Nachrichten Pfades, der nicht direkt am Netzelement angeschlossen ist, kann nur mittels eines Routing-Protokolls kommuniziert und erkannt werden. Die Umschaltzeiten sind hier in der Regel deutlich größer und liegen beispielsweise bei 30 s..250 s.

Lokale Netzwerke LAN (Layer 2 Switching):

Für die logische Protokollebene der LANs gibt es keine standardisierte Vorgehensweise für die Erkennung von gestörten Nachrichtenpfaden speziell bei redundanten Konfigurationen mit der genannten Struktur. Um Verbindungen Host-LAN-Gateway zu überwachen, kann beispielsweise das Spanning Tree Protocol SPT eingesetzt werden.

Das Protokoll SPT ist allerdings sehr träge, d.h. es wird eine erhebliche Zeitspanne, beispielsweise etwa 30 s, benötigt, um einen geeigneten Ersatzpfad festzulegen. Aus diesem Grund gibt es Bemühungen, eine schnellere Form des SPT, das Rapid Spanning Tree Protocol RSPT, beschrieben im IEEE Standard 802.1w, einzuführen. Die Überwachungszeiten für RSPT liegen jedoch immer noch im Bereich von mehreren Sekunden (Default Value für Bridge Hello Time = 2 s).

Für LANs mit einer Ring-Topologie sind Lösungen bekannt, z.B. Ethernet Automatic Protection Switching EAPS oder Resilient Packet Ring RPR, durch welche sehr kurze Umschaltzeiten, z.B. kleiner als 1 s, erreicht werden sollen. Alle Verfahren setzen jedoch ein LAN mit Ring-Topologie voraus, die nicht in allen Einsatzfällen gegeben ist.

Mit Blick auf die vorstehend beschriebenen bekannten Möglichkeiten zum Überprüfen von Nachrichtenpfaden ergeben sich folgende Probleme:

- Die bekannten Möglichkeiten setzen spezielle Routing-Protokolle voraus, die in allen Netzelemente implementiert sein müssen, und/oder sind auf bestimmte Netztopologien beschränkt.
- Werden klassische Testverfahren für Nachrichtenpfade, beispielsweise mittels Internet Control Message Protocol ICMP PING oder mittels RIP-Nachrichten, mit hoher Häufigkeit ausgeführt, wird das jeweilige Responder-Element, welches die Testanforderungen behandelt und beantwortet, mit einer erheblichen Rechenlast beaufschlagt.
- Die Umschaltzeiten liegen außerhalb des für Echtzeitkommunikation tolerierbaren Bereichs.

Es ist eine Aufgabe der vorliegenden Erfindung, ein Testverfahren für Nachrichtenpfade in Kommunikationsnetzen sowie ein verbessertes Netzelement anzugeben, durch welche die Nachteile des Standes der Technik vermieden werden.

Diese Aufgabe wird durch ein Testverfahren für Nachrichtenpfade in Kommunikationsnetzen ausgehend vom Oberbegriff des Patentanspruchs 1 durch dessen kennzeichnende Merkmale und ein Netzelement gemäß der Merkmale des Patentanspruchs 15 gelöst.

Bevorzugte Ausführungsformen sind Gegenstand der abhängigen Ansprüche.

Ein wichtiger Aspekt der vorliegenden Erfindung ist ein Testverfahren für Nachrichtenpfade, welches vorteilhaft einsetzbar ist, falls zwei Einrichtungen Nachrichten einer ersten Protokollschicht, beispielsweise IP Pakete, über ein Kommunikationsnetz einer niedrigeren Protokollschicht, beispielsweise ein LAN, austauschen, wobei die zwischen den Einrichtungen über das Kommunikationsnetz ausgetauschten Nachrichten durch das Kommunikationsnetz transparent, d.h. unverändert, übermittelt werden. Eine das Testverfahren initiierende Einrichtung sendet erfindungsgemäß mit kurzen zeitlichen Abständen Testnachrichten der ersten Protokollschicht, z.B. spezielle IP Pakete, wobei für solche Testnachrichten sowohl als Absendeadresse als auch als Empfangsadresse die Adresse der ersten Protokollschicht, z.B. die IP Adresse, der initiierenden Einrichtung gewählt wird. Es ist auch möglich, daß das Testverfahren durch beide Einrichtungen ausgeführt wird, so daß beide (End)Einrichtungen einer Kommunikationsbeziehung den Status der Nachrichtenpfade kennen.

Ein wesentlicher Vorteil der Erfindung ist darin zu sehen, daß die von der ersten zur zweiten Einrichtung gesendeten Testnachrichten nicht durch den Vermittlungsprozessor der zweiten Einrichtung bearbeitet werden, sondern bereits durch die Schnittstelleneinheit der zweiten Einrichtung. Damit wird vermieden, daß die Testnachrichten, die zum möglichst schnellen Erkennen von Störungen von Nachrichtenpfaden häufig, beispielsweise aller 100 ms, gesendet werden, Prozessorlast in der zweiten Einrichtung erzeugen.

Für das bevorzugte Ausführungsbeispiel, bei dem Nachrichtenpfade eines LAN zwischen einem Host und einem Gateway getestet werden, besteht also ein wichtiger Vorteil darin, daß der erfindungsgemäße Linktest nicht zu einer Überlastsituation am Gateway führt. In herkömmlichen Implementierungen werden PING oder Route-Update Nachrichten bzw. RIP Nachrichten mit zeitlichen Abständen von 30 s bis 300 s verwendet, wodurch eine schnelle Erkennung gestörter Nachrichtenpfade, die beispielsweise für Sprachkommunikation erforderlich ist, nicht möglich ist. Die Verwendung der bekannten ICMP-PING oder RIP Nachrichten würde zu Überlast führen, wenn diese Nachrichten mit der genannten hohen Häufigkeit, also mehrfach pro Sekunde für jeden Nachrichtenpfad, bei vielen angeschlossenen Hosts gesendet würden.

Mittels eines Timers kann vorteilhaft überwacht werden, ob die Testnachrichten über die Nachrichtenpfade, über welche die Testnachrichten gesendet wurden, korrekt und innerhalb eines erwarteten Zeitintervalls, das an der erwarteten Nachrichtenlaufzeit im Kommunikationsnetz orientiert ist, empfangen wurden. Werden Testnachrichten nicht oder nach Ablauf des Timers empfangen, liegt wahrscheinlich eine Störung des entsprechenden Nachrichtenpfades vor. Damit der Verlust einzelner Testnachrichten nicht zu der falschen Annahme führt, der jeweilige Nachrichtenpfad sei generell gestört, kann der Verlust mehrerer Testnachrichten als Kriterium für eine Störung des Nachrichtenpfades verwendet werden.

Die Informationen betreffend die Störungen einzelner Nachrichtenpfade können vorteilhaft eingesetzt werden, um den jeweils optimalen verbleibenden Nachrichtenpfad auszuwählen. Je nach gewählter Topologie der beteiligten Netzwerke und unter Berücksichtigung von Faktoren wie mit einzelnen Nachrichtenpfaden assoziierte Kosten, Zahl vorhandener, redundanter Schnittstellen oder Einrichtungen kann dabei die Auswahl des optimalen Nachrichtenpfades erfolgen.

Die Erfindung erfordert keine Modifikationen an Komponenten des Kommunikationsnetzwerkes und ist daher einfach und kostengünstig implementierbar. Die Umsetzung ist daher einfach und betrifft lediglich die den Test initiierende Einrichtung.

Erfindungsgemäß wird ebenfalls ein Netzelement vorgesehen, welches Mittel zur Durchführung dieses Testverfahrens aufweist.

Im folgenden wird die Erfindung im Zusammenhang mit sechs Figuren als Ausführungsbeispiel näher erläutert.

Figur 1      stellt die Anbindung einer Host-Einrichtung an ein Gateway über ein redundantes LAN schematisch dar.

Figur 2      stellt den Ablauf eines Tests zwischen einer Host-Einrichtung und dem Gateway im störungsfreien Fall schematisch dar.

Figuren 3-6      zeigen schematisch den Ablauf eines Tests in verschiedenen Störungsfällen.

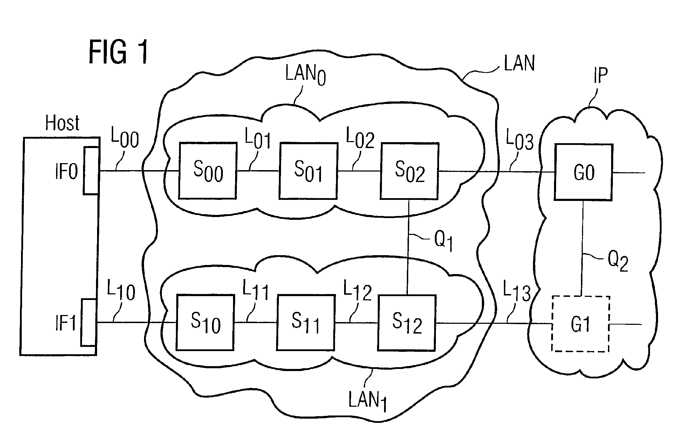

Mit Bezug auf Figur 1 wird im folgenden zunächst eine beispielhafte redundante Netztopologie erläutert, für welche die vorliegende Erfindung vorteilhaft eingesetzt werden kann. Dabei dient diese Topologie der Veranschaulichung eines Ausführungsbeispiels der Erfindung, wobei die Erfindung mit beliebigen Topologien angewendet werden kann.

In Figur 1 ist eine erste Einrichtung Host dargestellt. Bei dieser ersten Einrichtung kann es sich beispielsweise um eine der eingangs genannten Hosts oder Service-Plattformen handeln. Die erste Einrichtung kann jedoch eine beliebige Kommunikationseinrichtung mit L3 Kommunikationsfähigkeiten sein. Im folgenden wird zur Vereinfachung die Bezeichnung Host für die erste Einrichtung verwendet.

Der Host wird über ein Kommunikationsnetz LAN mit einer zweiten Einrichtung G0 verbunden. Bei dieser zweiten Einrichtung kann es sich beispielsweise um einen der eingangs genannten Gateways handeln. Die zweite Einrichtung kann jedoch ebenfalls eine beliebige Kommunikationseinrichtung mit L3 Kommunikationsfähigkeiten sein. Im folgenden wird zur Vereinfachung die Bezeichnung Gateway für die zweite Einrichtung verwendet.

Bei dem Kommunikationsnetz LAN handelt es sich im bevorzugten Ausführungsbeispiel um ein lokales Netzwerk bzw. Local Area Network LAN, welches z.B. nach dem Ethernet-Standard arbeitet. Andere Netzwerke und/oder Protokolle sind für den transparenten Nachrichtentransport zwischen Host und Gateway einsetzbar. Im folgenden wird zur Vereinfachung die Bezeichnung LAN für das Kommunikationsnetz verwendet.

Ohne besonderes Wissen über das LAN oder seine Topologie ist die Erfindung bereits zum Testen des Nachrichtenpfades oder der Nachrichtenpfade über das LAN geeignet. Die im folgenden vorgestellte Topologie ist jedoch für die Verwendung mit der Erfindung besonders geeignet, insbesondere hinsichtlich der möglichen Ersatznachrichtenpfade im Störungsfall.

Das LAN ist in zwei unabhängige Teilnetze $LAN_0$, $LAN_1$ gegliedert. Diese Gliederung wird im einfachsten Fall auf logischer Ebene realisiert, wird jedoch, um eine möglichst große Ausfallsicherheit vorzusehen, vorteilhaft auch räumlich vorgenommen. Dabei besteht $LAN_0$ aus einer Anzahl von Vermittlungskomponenten oder Switches $S_{00}$, $S_{01}$, $S_{02}$. Dargestellt sind drei Vermittlungskomponenten, allerdings ist diese Anzahl lediglich beispielhaft und aus Sicht dieser Erfindung beliebig, ebenso wie die Struktur des $LAN_0$ beliebig ist, die nur beispielhaft als linear dargestellt ist.

Die Switches $S_{00}$, $S_{01}$ sind mit einer Verbindung $L_{01}$ verbunden, wobei diese Verbindung repräsentativ für eine logische, bidirektionale Verbindung zwischen den Switches dargestellt ist und beispielsweise physikalisch durch mehrere Verbindungen gebildet sein kann. In gleicher Weise sind die Switches $S_{01}$, $S_{02}$ mit einer Verbindung $L_{02}$ verbunden.

$LAN_1$ besteht aus einer Anzahl von Vermittlungskomponenten oder Switches $S_{10}$, $S_{11}$, $S_{12}$. Dargestellt sind drei Vermittlungskomponenten, allerdings ist diese Anzahl lediglich beispielhaft und aus Sicht dieser Erfindung beliebig, ebenso wie die Struktur des $LAN_0$ beliebig ist, die nur beispielhaft als linear dargestellt ist. Die Switches $S_{10}$, $S_{11}$ sind mit einer Verbindung $L_{11}$ verbunden, wobei diese Verbindung repräsentativ für eine logische, bidirektionale Verbindung zwischen den Switches dargestellt ist und beispielsweise physikalisch durch mehrere Verbindungen gebildet sein kann. In gleicher Weise sind die Switches $S_{11}$, $S_{12}$ mit einer Verbindung $L_{12}$ verbunden.

$LAN_0$ ist mit dem Host über eine Verbindung $L_{00}$ verbunden. $LAN_1$ ist mit dem Host über eine Verbindung $L_{10}$ verbunden. Dabei weist der Host zwei gesonderte Schnittstellen IF0, IF1 auf, wobei eine erste Schnittstelle IF0 der Verbindung mit $LAN_0$ dient und eine zweite Schnittstelle IF1 der Verbindung mit $LAN_1$.

Der Verbindung von $LAN_0$ mit dem Gateway G0 dient eine Verbindung $L_{03}$. Je nach Ausprägung der Redundanztopologie verfügt $LAN_1$ ebenfalls über eine Anbindung an Gateway G0 - nicht dargestellt - und/oder über zumindest eine Querverbindung $Q_1$ zu $LAN_0$. Vorteilhaft erfolgt diese Querverbindung möglichst nah am Übergang von $LAN_0$ zum Gateway G0, d.h. wie in Figur 1 dargestellt beispielsweise zwischen $S_{02}$ und $S_{12}$. Ist die Querverbindung $Q_1$ nicht unmittelbar am Übergang von $LAN_0$ zum Gateway G0 angeordnet, können geeignete Protokollen zur Vermeidung von L2 Loops im Zusammenhang mit der vorliegenden Erfindung eingesetzt werden. Es versteht sich, daß die Querverbindung $Q_1$ physikalisch aus mehreren Verbindungen bestehen kann.

In einer Alternative ist zusätzlich zum Gateway G0 ein Ersatz-Gateway G1 vorgesehen, beispielsweise für den Fall des Ausfalls des Gateway G0 - gestrichelt dargestellt. Dabei können die Gateways G0, G1 ebenfalls mittels einer Querverbindung $Q_2$ verbunden sein. Eine Verbindung $L_{13}$ verbindet $LAN_1$ und Gateway G1. Je nach Ausprägung der Redundanztopologie verfügt $LAN_0$ ebenfalls über eine Anbindung an Gateway G1 - nicht dargestellt.

Eine Priorisierung der Gateways G0, G1 kann vorgenommen werden, indem die Routing-Tabellen entsprechend administriert werden. Beispielsweise kann die Verbindung von Gateway G0 ins weitere IP Netz IP als eine lower-cost Route und die Verbindung von Gateway G1 ins weitere IP Netz IP als eine higher-cost Route eingerichtet werden. Die Priorisierung ist eine Möglichkeit, im Fall einer Störung der Querverbindung $Q_1$ sicherzustellen, daß der Host stets das an den Default Gateway G0 angeschlossene Netzwerk (hier: $LAN_0$) zur Kommunikation verwendet.

Eine solche Priorisierung ist jedoch nicht in allen Fällen erforderlich, beispielsweise falls die Querverbindung $Q_1$ physikalisch aus mehreren Verbindungen besteht - nicht dargestellt. In diesem Fall ist die Priorisierung nicht erforderlich, da beim Ausfall einer dieser Verbindungen zumindest eine weitere Verbindung zur Verfügung steht.

Mit der vorgestellten Netztopologie ergeben sich beispielhaft folgende Nachrichtenpfade, dabei werden nur LAN-interne Pfade betrachtet:

Pfad1:   Host <-> IF0 <-> $LAN_0$ <-> G0 <-> IP
Pfad2:   Host <-> IF1 <-> $LAN_1$ <-> $Q_1$ <-> $S_{02}$ <-> G0 <-> IP
Pfad3:   Host <-> IF0 <-> $LAN_0$ <-> $Q_1$ <-> $S_{12}$ <-> G1 <-> IP

Pfad4:     Host <-> IF1 <-> LAN$_1$ <-> G1 <-> IP

Ist für die Gateways G0, G1 die genannte Priorisierung vorgesehen, und wird zudem noch eine Priorisierung der Schnittstellen IF0, IF1 vorgenommen, wobei beispielsweise IF0 die höhere Priorität hat, ergibt sich folgende Priorisierung der genannten Pfade, falls die Gateway-Priorisierung stärker wirken soll als die Schnittstellen-Priorisierung:

Pfad1 > Pfad2 > Pfad3 > Pfad 4

Weitere Nachrichtenpfade ergeben sich in analoger Weise, wenn die genannten Über-Kreuz-Verbindungen von LAN$_0$ zu G1 und LAN$_1$ zu G0 vorhanden sind und/oder wenn weitere Querverbindungen oder auch Kreuzverbindungen innerhalb des LAN zwischen LAN$_0$ und LAN$_1$ existieren.

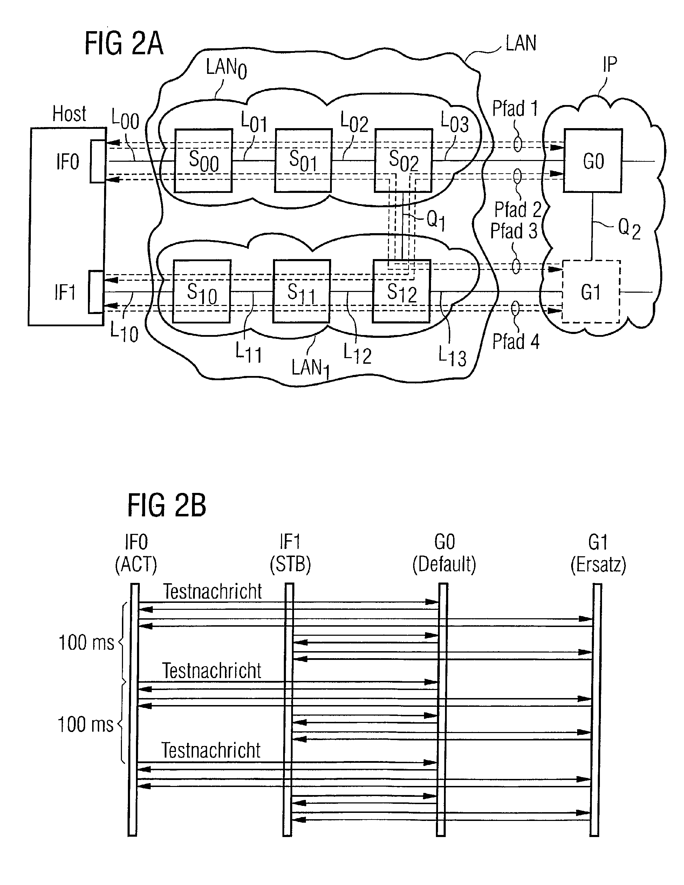

Figur 2 zeigt schematisch das LAN aus Figur 1 mit den durch das LAN transportierten Testnachrichten im störungsfreien Fall. Dabei wird in Figur 2A der Weg der Testnachrichten durch das LAN gezeigt. Figur 2B zeigt ein Diagramm mit zeitlichen Abläufen, wobei dieses Diagramm stark idealisiert ist dahingehend, daß die Laufzeiten der Testnachrichten nicht gesondert berücksichtigt werden. Auch werden in Diagramm 2B nur Testnachrichten, jedoch nicht Nutzdaten berücksichtigt.

Der Test der Nachrichtenpfade erfolgt nun, indem der Host über jedes Interface bzw. jede Schnittstelle IF0, IF1 an jeden Gateway G0, G1 in sehr kurzen zeitlichen Abständen, z.B. aller 100 ms, spezielle Test IP Datagramme sendet. Als Source IP Adresse und als Destination IP Adresse wird die IP Adresse der jeweiligen eigenen Schnittstelle IF0 bzw. IF1 eingetragen. So wird das Test-Paket durch den Gateway wieder an die sendende Schnittstelle IF0, IF1 des Host zurückgespiegelt.

Folgende Tabelle zeigt die zu wählenden IP und MAC Adressen zum Test der Nachrichtenpfade Pfad1..Pfad4:

|                  | Pfad1 | Pfad2 | Pfad3 | Pfad4 |
|------------------|-------|-------|-------|-------|
| Destination-MAC  | G0    | G0    | G1    | G1    |
| Source-MAC       | IF0   | IF1   | IF0   | IF1   |
| Destination-IP   | IF0   | IF1   | IF0   | IF1   |
| Source-IP        | IF0   | IF1   | IF0   | IF1   |

Prinzipiell erfolgt also die Adressierung der Layer 2 Nachrichten korrekt anhand der jeweiligen MAC (MAC = Media Access Control) Adressen, wohingegen die Adressierung der übergeordneten Layer 3 Nachrichten so modifiziert wird, daß die Layer 3 Nachrichten zur sendenden Instanz zurückgeroutet werden. Dieses Prinzip fußt auf der Tatsache, daß in der Regel Nachrichten des Layer n beim Transport durch ein Layer n-1 Netzwerk nicht modifiziert werden und daß Layer n Adreßinformationen durch das Layer n-1 Netzwerk nicht ausgewertet werden.

Für IP Testnachrichten besteht ein wichtiger Vorteil darin, daß nur die "IP-Forwarding" Funktion, die auf den hoch leistungsfähigen Schnittstellenkarten der Gateways realisiert ist, für die Spiegelung bzw. Rücksendung der Testnachrichten an die sendende Instanz erforderlich ist. Eine Überlastsituation im Gateway durch das erfindungsgemäße Verfahren kann somit nicht eintreten, da der Vermittlungsprozessor der Gateways überhaupt nicht in die Bearbeitung der Testnachrichten involviert ist.

Wird innerhalb einer bestimmten Zeit, z.B. 100 ms, die beim jeweiligen Ziel gespiegelte Testnachricht vom Host nicht wieder empfangen, liegt wahrscheinlich eine Störung des entsprechenden Nachrichtenpfades vor. Dies wird beispielweise in einem Speicher vermerkt. In einer Weiterbildung der Erfindung wird die Störung des Nachrichtenpfades erst dann als andauernde Störung vermerkt, wenn auch die folgende, mit diesem Nachrichtenpfad assoziierte Testnachricht nicht wieder beim Host empfangen wird. In einer weiteren Weiterbildung ist die Anzahl der aufeinanderfolgenden Nachrichten, die pro Nachrichtenpfad verlorengehen dürfen, bevor dies als Störung gewertet wird, den jeweiligen Anforderungen anpaßbar.

Alternativ besteht auch die Möglichkeit, die aus-gesendeten Testnachrichten mit Folgenummern oder Sequenznummern zu kennzeichnen. Diese werden in die Payload der Testnachrichten eingetragen. Der Verlust einer konfigurierbaren Anzahl nicht notwendigerweise aufeinanderfolgender Testnachrichten kann ebenso als Kriterium für die Ausfallerkennung herangezogen werden, d.h. die Nachrichtenpfade werden durch Numerierung der Testnachrichten überwacht. Der Zähler für verlorene Testnachrichten kann dabei so gestaltet sein, daß eine verlorene Testnachricht den Zähler um 1 erhöht und eine konfigurierbare Anzahl verlustfrei empfangener Testnachrichten, z.B. 1000, den Zähler um 1 erniedrigt. Alternativ kann das Erniedrigen des Zählers nach Ablauf einer Zeitspanne, während der kein Testnachrichtenverlust aufgetreten ist, erfolgen. Erreicht der Zähler einen Grenzwert, wird der Nachrichtenpfad als gestört gewertet.

Werden die Nachrichtenpfade mit hinreichend kurzen zeitlichen Abständen mit Hilfe des erfindungsgemäßen Verfahrens überprüft, im beschriebenen Ausführungsbeispiel aller 100 ms, und wird ein fehlgeschlagener Test genau einmal wiederholt, bevor der entsprechende Pfad als gestört gewertet wird, wird bei Fehlschlagen des wiederholten Tests der Nachrichtenpfad mit sehr geringer Verzögerung, hier 200 ms, als gestört erkannt.

Dem Fachmann ist es anhand des konkreten Einsatzfalles ohne weiteres möglich, die beschriebenen Parameter des erfindungsgemäßen Testverfahrens an den Einsatzfall anzupassen.

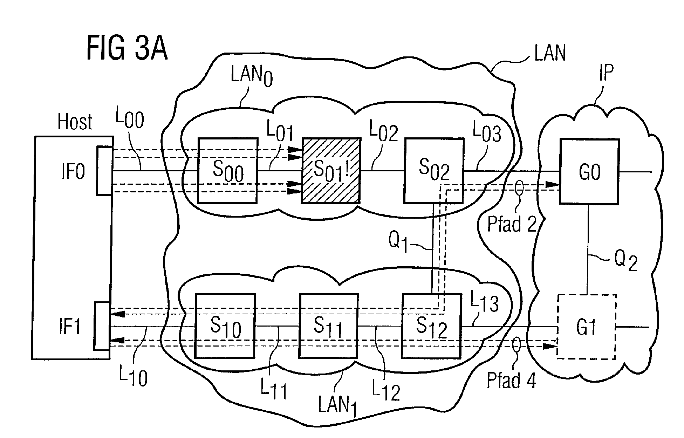

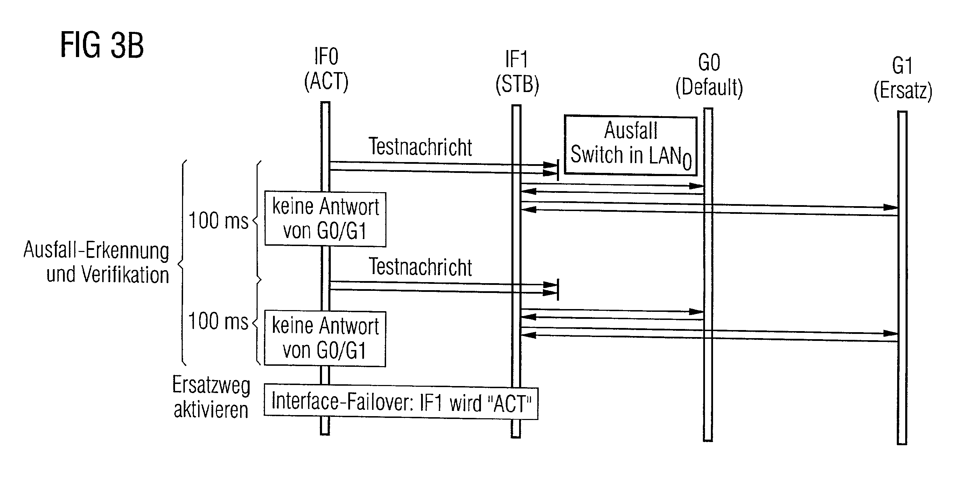

Nachdem eine Störung erkannt und vermerkt wurde, besteht die Notwendigkeit, den Nutzdatenverkehr des gestörten Nachrichtenpfades auf einen anderen, ungestörten Nachrichtenpfad umzulenken. Die Verfahren hierzu sind wohlbekannt. Im folgenden werden jedoch vorteilhafte Strategien zur Auswahl des Ersatz-Nachrichtenpfades mit Bezug auf die Figuren 3 bis 6 dargestellt, wobei Figuren 3 bis 6 beispielhafte Störungen von Nachrichtenpfaden enthalten.

Figur 3A zeigt den Ausfall eines Switches in $LAN_0$, der nicht an die Querverbindung $Q_1$ angeschlossen ist, hier beispielhaft Switch $S_{01}$. Dadurch werden die Pfade 1 und 3 gestört. Pfade 2 und 4 sind ungestört. Der entsprechende Signalfluß ist in Figur 3B dargestellt. Von Schnittstelle IF0, die als die bis dahin aktive (ACT) Schnittstelle dargestellt ist, werden Testnachrichten an beide Gateways G0 und G1 gesendet, die allerdings aufgrund des Ausfalls verlorengehen. Nachdem der Test zweimal in Folge fehlschlägt, wird die Störung von Pfad1 und Pfad3 erkannt. Von Schnittstelle IF1, die als Standby (STB) Schnittstelle dargestellt ist, werden Testnachrichten an beide Gateways G0 und G1 gesendet, die entsprechend wieder empfangen werden. Pfad2 und Pfad4 werden als ungestört erkannt. Entsprechend der Priorisierung der Nachrichtenpfade wird Pfad2 als Ersatzweg aktiviert, indem die Schnittstelle IF1 von STB nach ACT wechselt. Für Schnittstelle IF0 wird beispielsweise der Zustand "gestört" vermerkt, und, falls erforderlich, ein Alarm für Bedienpersonal ausgelöst.

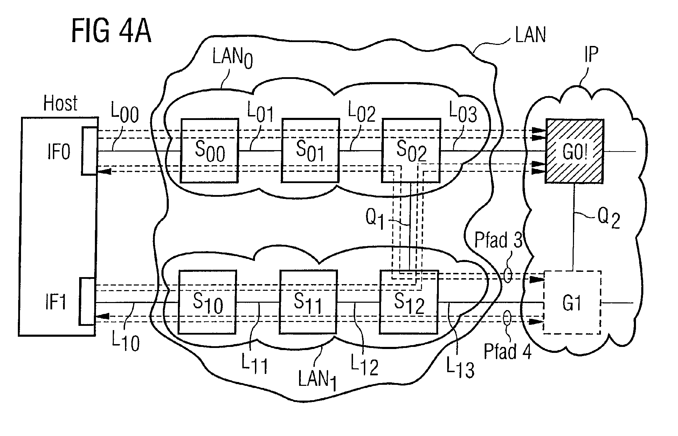

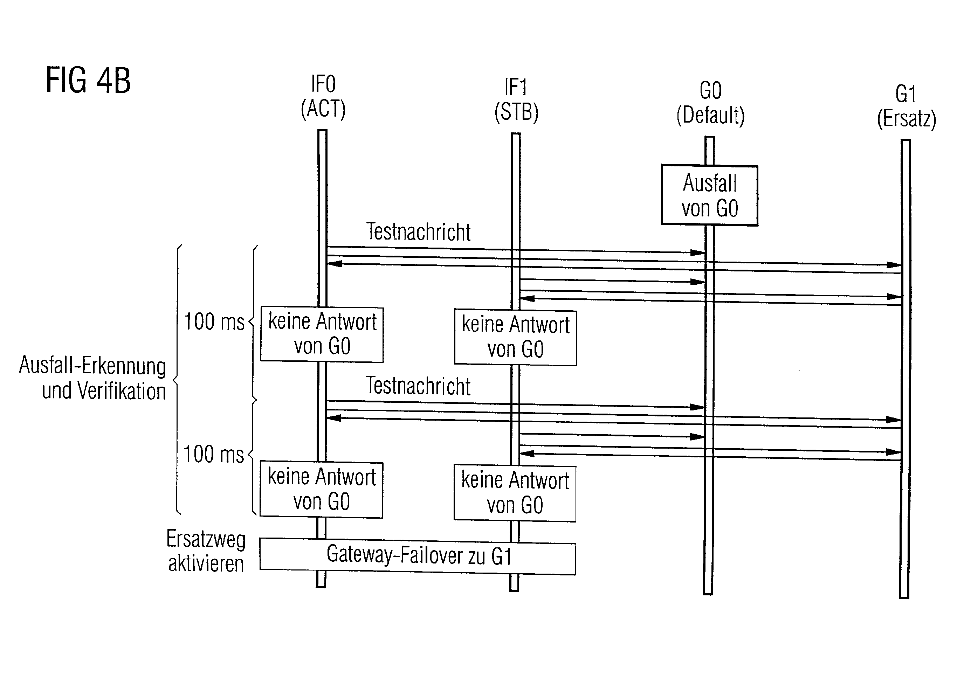

Figur 4A zeigt den Ausfall des Gateway G0. Dadurch werden die Pfade 1 und 2 gestört. Pfade 3 und 4 sind ungestört. Der entsprechende Signalfluß ist in Figur 4B dargestellt. Von beiden Schnittstellen IF0, IF1 werden Testnachrichten an den Default Gateway G0 gesendet, die allerdings aufgrund des Ausfalls verlorengehen. Nachdem der Test zweimal in Folge fehlschlägt, wird die Störung von Pfad1 und Pfad2 erkannt. Von beiden Schnittstellen IF0, IF1 werden Testnachrichten an den Ersatz-Gateway G1 gesendet, die entsprechend wieder empfangen werden. Folglich werden Pfad3 und Pfad4 als ungestört erkannt. Entsprechend der Priorisierung der Nachrichtenpfade wird Pfad3 als Ersatzweg aktiviert, indem ein sogenannter Gateway Failover (Umschalten zum Ersatz-Gateway) ausgeführt wird. Für Gateway G0 wird beispielsweise der Zustand "gestört" vermerkt, und, falls erforderlich, ein Alarm für Bedienpersonal ausgelöst.

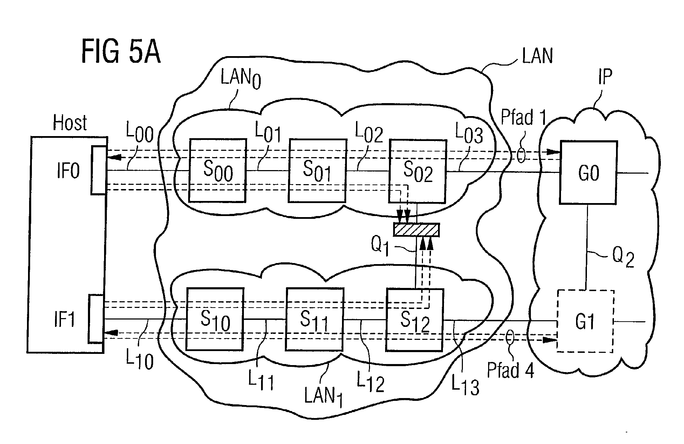

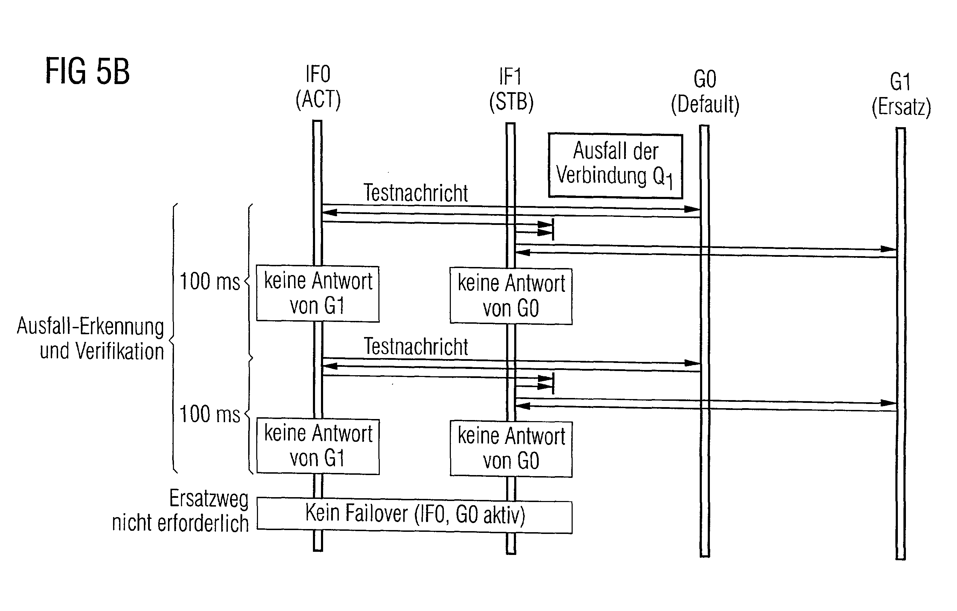

Figur 5A zeigt den Ausfall einer Querverbindung Q1 zwischen $LAN_0$ und $LAN_1$. Dadurch werden die Pfade 2 und 3 gestört. Pfade 1 und 4 sind ungestört. Der entsprechende Signalfluß ist in Figur 5B dargestellt. Von Schnittstelle IF0, die als die bis dahin aktive (ACT) Schnittstelle dargestellt ist, werden Testnachrichten an Gateway G1 gesendet, die allerdings aufgrund des Ausfalls verlorengehen. Nachdem der Test zweimal in Folge fehlschlägt, wird die Störung von Pfad3 erkannt. Von Schnittstelle IF1, die als Standby (STB) Schnittstelle dargestellt ist, werden Testnachrichten an Gateway G0 gesendet, die allerdings aufgrund des Ausfalls verlorengehen. Nachdem der Test zweimal in Folge fehlschlägt, wird die Störung von Pfad2 erkannt. Von Schnittstelle IFO werden Testnachrichten an Gateway G0 gesendet, die entsprechend wieder empfangen werden. Pfad1 wird als ungestört angesehen. Von Schnittstelle IF1 werden Testnachrichten an Gateway G1 gesendet, die entsprechend wieder empfangen werden. Pfad4 wird als ungestört angesehen. Entsprechend der Priorisierung der Nachrichtenpfade bleibt Pfad1 aktiv, es kann jedoch eine Benachrichtigung für Bedienpersonal erfolgen, daß eine Störung vorliegt.

Wird durch einen weiteren Ausfall auch Pfad1 gestört, ohne daß die Störung der Pfade 2 und 3 entfällt, wird dann direkt auf den niedrigst priorisierten Pfad 4 umgeschaltet. Da die Störungsinformationen aufgrund des auch für gestörte Pfade weiterhin aller 100 ms ablaufenden Tests stets aktuell sind, kann diese Umschaltung verzögerungsfrei erfolgen, ohne daß zunächst ein Umschalten auf Pfade 2 oder 3 versucht wird.

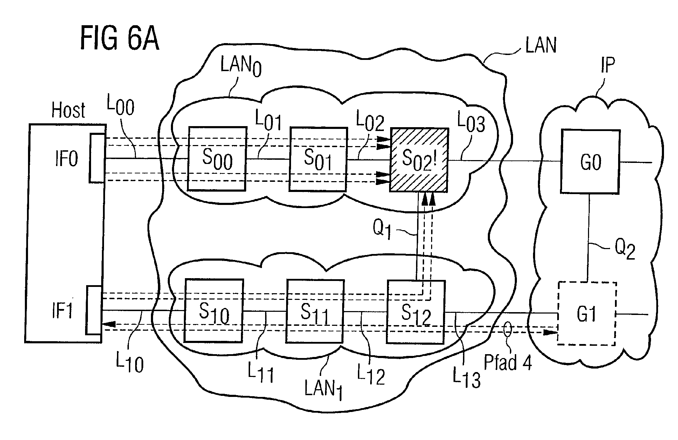

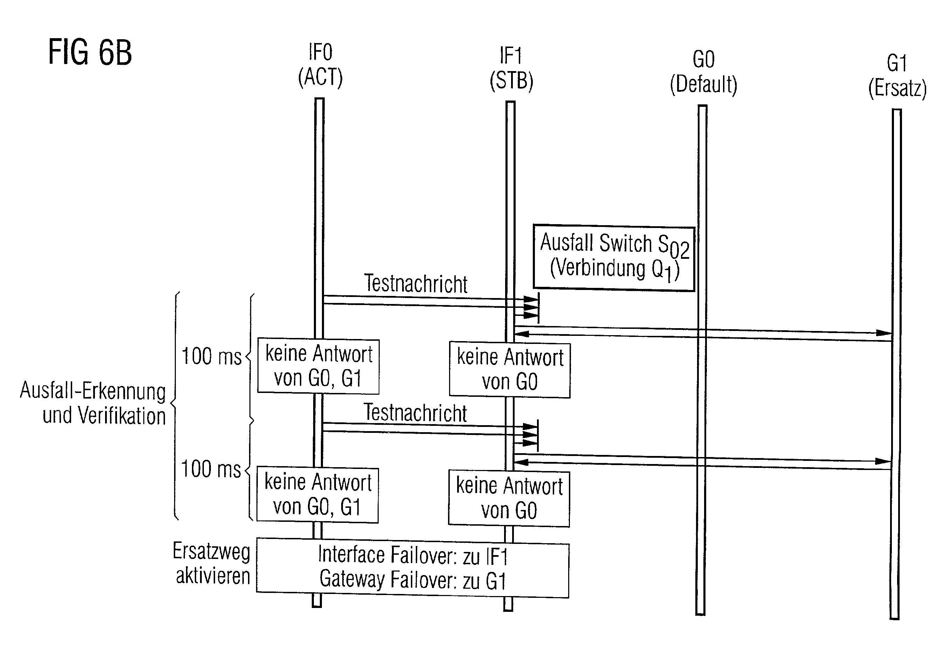

Figur 6A zeigt den Ausfall eines Switches in $LAN_0$, der an die Querverbindung $Q_1$ angeschlossen ist, hier beispielhaft Switch $S_{02}$. Dadurch werden die Pfade 1, 2 und 3 gestört. Pfad 4 ist ungestört. Der entsprechende Signalfluß ist in Figur 6B dargestellt. Von Schnittstelle IF0, die als die bis dahin aktive (ACT) Schnittstelle dargestellt ist, werden Testnachrichten an beide Gateways G0 und G1 gesendet, die allerdings aufgrund des Ausfalls verlorengehen. Nachdem der Test zweimal in Folge fehlschlägt, wird die Störung von Pfad1 und Pfad3 erkannt. Von Schnittstelle IF1, die als Standby (STB) Schnittstelle dargestellt ist, werden Testnachrichten an Gateway G0 gesendet, die allerdings aufgrund des Ausfalls verlorengehen. Nachdem der Test zweimal in Folge fehlschlägt, wird die Störung von Pfad2 erkannt. Von Schnittstelle IF1 werden Testnachrichten an Gateway G1 gesendet, die entsprechend wieder empfangen werden. Pfad4 wird folglich als ungestört erkannt.

Da Pfad4 der einzige verbleibende Pfad ist, wird dieser als Ersatzweg aktiviert, indem die Schnittstelle IF1 von STB nach ACT wechselt. Für Schnittstelle IF0 wird beispielsweise der Zustand "gestört" vermerkt, und gegebenenfalls ein Alarm für Bedienpersonal ausgelöst. Ein gesonderter Alarm, der anzeigt, daß kein weiterer Ersatz-Nachrichtenpfad vorhanden ist und somit jeder weitere Ausfall zum Totalausfall führt, kann ebenfalls ausgelöst werden.

Die mit Bezug auf Figuren 3 bis 6 beschriebene Umschaltstrategie wird in folgender Tabelle veranschaulicht.

Darin bedeuten:

| | |
|---|---|
| "x" | Pfad ungestört |
| "o" | Zustand des Pfades ist egal |
| "-" | Pfad gestört |
| "P1..P4" | Pfad1..Pfad4 |
| IF-FO | Schnittstellen-Failover |
| G-FO | Gateway-Failover |

| P1 | P2 | P3 | P4 | Reaktion | Mögliche Ursache |
|---|---|---|---|---|---|
| x | o | o | o | Kein F0 (IF0/G0 aktiv) | $LAN_0$ und G0 ungestört ($LAN_1$, $Q_1$, G1 können gestört sein) |
| - | x | o | o | IF-FO zu IF1 | Ausfall Switch oder Verbindung in $LAN_0$ |
| - | - | x | o | G-FO zu G1 | G0 Ausfall |
| - | - | - | x | IF-FO zu IF1 und G-FO zu G1 | Ausfall Switch mit Quererbindung $Q_1$ in $LAN_0$ |
| - | - | - | - | Kein FO (IF0 aktiv) | G0 und G1 Ausfall |

Dabei bedeutet ein Gateway Failover, daß der Host einen anderen Gateway zum Senden von IP Paketen Richtung IP Netzwerk verwendet, wohingegen Schnittstellen-Failover bedeutet, daß der Host eine andere Schnittstelle zum Senden und Empfangen von Nachrichten verwendet. Für die "interne" Kommunikation, d.h. die Kommunikation zwischen mehreren an das LAN angeschlossenen Hosts - nicht dargestellt -, ist es erforderlich, daß alle Hosts immer eine Verbindung zum gleichen Default Gateway G0 oder G1 haben. Dadurch wird die Host-zu-Host-Kommunikation auch bei Teilausfällen sichergestellt, beispielsweise bei Ausfällen des Querweges Ql. Ein Umschalten zum Ersatz Gateway G1 erfolgt erst, wenn der Default Gateway G0 weder über IF0 noch über IF1 erreichbar ist, was sich auch in der Priorisierung der Pfade niederschlägt.

Obwohl das Ausführungsbeispiel der Erfindung mit Bezug auf eine IP/LAN Umgebung beschrieben ist, ist die Erfindung nicht auf diese Protokollumgebung beschränkt. Verbindungsorientierte Protokolle können beispielsweise für die Überwachung der Host-Gateway Verbindung genutzt werden, wenn diese den Aufbau einer Verbindung "zu sich selbst" unterstützen, d.h. Source Adresse = Destination Adresse. Wird durch das Protokoll eine Unterbrechung der Verbindung erkannt, kann eine Umschaltung auf einen redundanten Übertragungsweg veranlaßt werden. Beispiel für solche Protokolle sind Real Time Protocol RTP oder Stream Control Transmission Protocol SCTP.

In bestimmten Netzwerken kann es erforderlich sein, daß sowohl die erste Einrichtung Host als auch die zweite und dritte Einrichtung G0, G1 den Status aller Nachrichtenpfade kennen. Um dies zu erreichen, kann das erfindungsgemäße Verfahren für alle Einrichtungen, die den Status der Nachrichtenpfade kennen müssen, implementiert werden. Alternativ kann der Status mittels Statusnachrichten von einer das Testverfahren ausführenden Einrichtung an alle weiteren Einrichtungen übermittelt werden. Der Vorteil der vorliegenden Erfindung besteht darin, daß sich die von verschiedenen Einrichtungen, z.B. mehreren Hosts, initiierten Testnachrichten nicht gegenseitig beeinflussen.

Ein beispielhaftes Netzelement Host, für den das vorstehend beschriebene Verfahren implementiert ist, weist neben Sendeempfangsvorrichtungen oder Schnittstellen IF0, IF1 zum Netzwerk LAN beispielsweise eine Steuerlogik auf, die das beschriebene Verfahren umsetzt. Dabei weist eine solche Steuerlogik eine Vorrichtung zum Bereitstellen von Testnachrichten auf, deren Ziel-Adressen und Quell-Adressen, z.B. Source IP Adresse und Destination IP Adresse, der Adresse des Netzelements und/oder seiner Schnittstellen entsprechen.

Ferner weist die Steuerlogik Vorrichtungen zum Überwachen der einzelnen Nachrichtenpfade auf. Die Nachrichtenpfade können dabei durch Bedienereingriff vorgegeben oder durch entsprechende Prozesse automatisch ermittelt werden.

Die Steuerlogik stellt anhand der bereits ausführlich erläuterten Kriterien fest, ob ein Nachrichtenpfad gestört ist und veranlaßt gemäß der Umschaltstrategie die Auswahl und das Umschalten auf einen alternativen Nachrichtenpfad. Dazu verfügt die Steuerlogik über entsprechende Umschaltmittel sowie über Speichermittel, in denen die Priorisierung einzelner Nachrichtenpfade hinterlegt ist.

**Patentansprüche**

1.    Testverfahren für einen zwischen einer ersten Einrichtung (Host) und einer zweiten Einrichtung (G0) bestehenden Nachrichtenpfad, wobei die erste Einrichtung (Host) und die zweite Einrichtung (G0) über ein Kommunikationsnetz ($LAN_0$) verbunden sind und wobei die Kommunikation zwischen der ersten und der zweiten Einrichtung mittels Nachrichten einer ersten Protokollschicht erfolgt, deren unmodifizierte Übertragung im Kommunikationsnetz ($LAN_0$) mittels einer der ersten Protokollschicht untergeordneten zweiten Protokollschicht erfolgt,

**dadurch gekennzeichnet,**

**daß** von der ersten Einrichtung (Host) zur zweiten Einrichtung (G0) mit kurzen zeitlichen Abständen Testnachrichten der ersten Protokollschicht gesendet werden, wobei für solche Testnachrichten sowohl als Absendeadresse als auch als Empfangsadresse die Adresse der ersten Einrichtung (Host) gemäß der ersten Protokollschicht gewählt wird.

2. Verfahren nach Anspruch 1,
   **dadurch gekennzeichnet,**
   **daß** der Nachrichtenpfad als zumindest zeitweise gestört markiert wird, wenn innerhalb einer angemessenen Zeit eine erste Testnachricht, die im störungsfreien Fall aufgrund der gewählten Empfangsadresse, die gleich der Absendeadresse ist, von der zweiten Einrichtung (G0) unmittelbar zurück an die erste Einrichtung (Host) gesendet wird, durch die erste Einrichtung (Host) nicht empfangen wird.

3. Verfahren nach Anspruch 2,
   **dadurch gekennzeichnet,**
   **daß** der Nachrichtenpfad als dauerhaft gestört markiert wird, wenn innerhalb einer angemessenen Zeit eine vorzugebende Anzahl weiterer Testnachrichten durch die erste Einrichtung (Host) nicht empfangen werden.

4. Verfahren nach Anspruch 3,
   **dadurch gekennzeichnet,**
   **daß** ein als dauerhaft gestört markierter Nachrichtenpfad weiterhin unter Verwendung der Testnachrichten getestet wird und die Markierung dieses Nachrichtenpfades als gestört aufgehoben wird, wenn anhand des Empfangs von Testnachrichten durch die erste Einrichtung (Host) das Ende der Störung festgestellt wird.

5. Verfahren nach einem der Ansprüche 1 bis 4,
   **dadurch gekennzeichnet,**
   **daß** von der zweiten Einrichtung (G0) zur ersten Einrichtung (Host) mit kurzen zeitlichen Abständen Testnachrichten der ersten Protokollschicht gesendet werden, wobei für solche Testnachrichten sowohl als Absendeadresse als auch als Empfangsadresse die Adresse der ersten Protokollschicht der zweiten Einrichtung (G0) gewählt wird.

6. Verfahren nach einem der Ansprüche 1 bis 5,
   **dadurch gekennzeichnet,**
   **daß** der Nachrichtenpfad als zumindest zeitweise gestört markiert wird, wenn innerhalb einer angemessenen Zeit eine erste Testnachricht, die im störungsfreien Fall aufgrund der gewählten Empfangsadresse, die gleich der Absendeadresse ist, von der zweiten Einrichtung (G0) unmittelbar zurück an die erste Einrichtung (Host) gesendet wird, durch die erste Einrichtung (Host) nicht empfangen wird.

7. Verfahren nach einem der Ansprüche 1 bis 4 oder 6,
   **dadurch gekennzeichnet,**
   **daß** der Nachrichtenpfad als dauerhaft gestört markiert wird, wenn innerhalb einer angemessenen Zeit eine vorzugebende Anzahl weiterer Testnachrichten durch die erste Einrichtung (Host) nicht empfangen werden.

8. Verfahren nach einem der Ansprüche 1 bis 4 oder 7,
   **dadurch gekennzeichnet,**
   **daß** ein als dauerhaft gestört markierter Nachrichtenpfad weiterhin unter Verwendung der Testnachrichten getestet wird und die Markierung dieses Nachrichtenpfades als gestört aufgehoben wird, wenn anhand des Empfangs von Testnachrichten durch die erste Einrichtung (Host) das Ende der Störung festgestellt wird.

9. Verfahren nach einem der Ansprüche 1 bis 8,
   **dadurch gekennzeichnet,**
   **daß** bei einer redundanten Verbindung mit mehreren Nachrichtenpfaden zwischen der ersten Einrichtung (Host) und der zweiten Einrichtung (G0), welche durch das genannte Kommunikationsnetz ($LAN_0$) und zumindest ein weiteres Kommunikationsnetz ($LAN_1$) gebildet wird, wobei separate Schnittstellen (IF0, IF1) der ersten Einrichtung Host mit den jeweils redundanten Kommunikationsnetzen ($LAN_0$, $LAN_1$) in Verbindung stehen und wobei Querverbindungen (Q) zwischen den redundanten Kommunikationsnetzen (LAN$_0$, LAN$_1$) vorgesehen sind, alle Nachrichtenpfade getestet und separat beim Vorliegen von Störungen als gestört markiert werden.

10. Verfahren nach Anspruch 9,
    **dadurch gekennzeichnet,**

    - **daß** zumindest eine Schnittstelle (IF0) als aktiv markiert ist und für die Übertragung von Nutzdaten verwendet wird und zumindest eine weitere Schnittstelle (IF1) als Standby markiert wird und für die Übertragung von Nutzdaten nicht verwendet wird, und
    - **daß** die Standby-Schnittstelle (IF1) aktiviert und die Übertragung von Nutzdaten fortan über die Standby-Schnittstelle (IF1) und einen mit der Standby-Schnittstelle assoziierten Nachrichtenpfad ausgeführt wird, sobald alle mit der aktiven Schnittstelle (IF0) assoziierten Nachrichtenpfade als zeitweise oder dauerhaft gestört markiert werden.

11. Verfahren nach einem der Ansprüche 9 oder 10,
    **dadurch gekennzeichnet,**
    **daß** die zweite Einrichtung (G0 ebenfalls redundant ausgelegt ist, indem zumindest eine dritte Einrichtung (G1) vorgesehen wird, durch welche die Funktion der zweiten Einrichtung (G0) bei deren Ausfall übernommen wird, wobei die Kommunikation der ersten Einrichtung (Host) grundsätzlich zur zweiten Einrichtung (G0) geleitet wird, solange die zweite Einrichtung (G0) über einen mit einer der Schnittstellen (IF0, IF1) assoziierten Nachrichtenpfad erreichbar ist und nur dann zur dritten Einrichtung (G1) geleitet wird, falls alle Nachrichtenpfade zwischen der ersten und der zweiten Einrichtung gestört sind.

12. Verfahren nach Anspruch 11,
    **dadurch gekennzeichnet,**
    **daß**, falls alle Nachrichtenpfade zwischen der ersten und der zweiten Einrichtung gestört sind und die Kommunikation zur dritten Einrichtung (G1) geleitet wird, die umgehend zur zweiten Einrichtung (G0) geleitet wird, sobald einer der gestörten Nachrichtenpfade zwischen der ersten und der zweiten Einrichtung wieder verfügbar ist.

13. Verfahren nach einem der Ansprüche 1 bis 12,
    **dadurch gekennzeichnet,**
    **daß** die Kommunikationsnetze (LAN$_0$, LAN$_1$) auf Protokollebene 2 einer Protokollhierarchie basieren und die erste, zweite und dritte Einrichtung Nachrichten, Datagramme oder Pakete der Protokollebene 3 der Protokollhierarchie austauschen oder vermitteln.

14. Verfahren nach einem der Ansprüche 1 bis 13,
    **dadurch gekennzeichnet,**
    **daß** die Kommunikationsnetze (LAN$_0$, LAN$_1$) lokale Netze oder Local Area Networks LAN sind und Nutzdaten gemäß des Ethernet-Protokolls übertragen oder vermitteln und die erste, zweite und dritte Einrichtung Nutzdaten gemäß des Internet-Protokolls IP austauschen oder vermitteln.

15. Netzelement (Host), das mittels eines Verbindungsnetzwerkes (LAN) mit zumindest einem weiteren Netzelement (G0, G1) verbunden ist, wobei aufgrund der Struktur des Verbindungsnetzwerkes mehrere Nachrichtenpfade zwischen dem Netzelement (Host) und dem weiteren Netzelement (G0, G1) existieren und wobei durch das Verbindungsnetzwerk (LAN) die zwischen den Netzelementen ausgetauschten Daten unverändert vermittelt werden, wobei das Netzelement folgendes aufweist:

    - Mittel zum Erzeugen von auf die Nachrichtenpfade bezogenen Testnachrichten, die aufgrund ihrer Eigenschaften vom weiteren Netzelement (G0, G1) unmittelbar an das Netzelement (Host) zurückgesendet werden,
    - Mittel zum Senden der Testnachrichten an das weitere Netzelement (G0, G1) über die Nachrichtenpfade,
    - Mittel zum Empfang der Testnachrichten auf allen Nachrichtenpfaden.

16. Netzelement (Host) nach Anspruch 15, das zusätzlich folgendes aufweist:

    Mittel zum Feststellen eines gestörten Nachrichtenpfades ansprechend auf eine konfigurierbare Anzahl auf diesem Nachrichtenpfad verlorener Testnachrichten, wobei das Netzelement zum Feststellen des Verlusts von Testnachrichten pro Nachrichtenpfad Timer aufweist, deren Ablauf den Verlust einer Testnachricht signalisiert, wobei der Timer mit einem der maximal zulässigen Signallaufzeit im Verbindungsnetzwerk (LAN) entsprechenden Wert initialisiert und mit dem Aussenden der Testnachricht gestartet wird und wobei der Timer beim korrekten Empfang der Testnachricht gestoppt wird.

**17.** Netzelement (Host) nach einem der Ansprüche 15 oder 16, das zusätzlich folgendes aufweist:

Mittel zum Umleiten des Nutzdatenverkehrs auf einen Nachrichtenpfad nächstniedrigerer Priorität bei Störung des bis dahin verwendeten Nachrichtenpfades höherer Priorität.

**18.** Netzelement (Host) nach Anspruch 17, das zusätzlich folgendes aufweist:

- Mittel zum Feststellen des Endes der Störung eines Nachrichtenpfades ansprechend auf den wieder einsetzenden Empfang von Testnachrichten, und
- Mittel zum Umleiten des Nutzdatenverkehrs auf den Nachrichtenpfad nächsthöherer Priorität ansprechend auf das Ende der Störung.

# FIG 1

LAN

$LAN_0$

IP

Host

$L_{00}$

IF0

$L_{01}$   $S_{00}$   $L_{02}$   $S_{01}$   $S_{02}$   $L_{03}$   G0

$Q_1$

$Q_2$

$L_{10}$

IF1

$L_{11}$   $S_{10}$   $L_{12}$   $S_{11}$   $S_{12}$   $L_{13}$   G1

$LAN_1$

## FIG 2A

## FIG 2B

FIG 3A

# FIG 3B

IF0
(ACT)

IF1
(STB)

G0
(Default)

G1
(Ersatz)

Testnachricht

Ausfall
Switch in LAN$_0$

Ausfall-Erkennung
und Verifikation

100 ms { keine Antwort
von G0/G1

Testnachricht

100 ms { keine Antwort
von G0/G1

Ersatzweg
aktivieren

Interface-Failover: IF1 wird "ACT"

EP 1 394 985 A1

# FIG 4A

## FIG 4B

EP 1 394 985 A1

## FIG 5A

## FIG 5B

IF0 (ACT)　　IF1 (STB)　　G0 (Default)　　G1 (Ersatz)

Ausfall der Verbindung $Q_1$

Testnachricht

| 100 ms | keine Antwort von G1 | keine Antwort von G0 |

Ausfall-Erkennung und Verifikation

Testnachricht

| 100 ms | keine Antwort von G1 | keine Antwort von G0 |

Ersatzweg nicht erforderlich — Kein Failover (IF0, G0 aktiv)

EP 1 394 985 A1

FIG 6A

FIG 6B

IF0
(ACT)

IF1
(STB)

G0
(Default)

G1
(Ersatz)

Ausfall Switch $S_{02}$
(Verbindung $Q_1$)

Testnachricht

Ausfall-Erkennung
und Verifikation

100 ms

| keine Antwort |
| von G0, G1 |

| keine Antwort |
| von G0 |

Testnachricht

100 ms

| keine Antwort |
| von G0, G1 |

| keine Antwort |
| von G0 |

Ersatzweg
aktivieren

Interface Failover: zu IF1
Gateway Failover: zu G1

EP 1 394 985 A1

**Europäisches Patentamt**

# EUROPÄISCHER RECHERCHENBERICHT

Nummer der Anmeldung

EP 02 01 9297

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | WO 99 21322 A (FOXBORO CO) 29. April 1999 (1999-04-29) | 1,15 | H04L12/26 H04L12/56 H04L29/14 |
| Y | * Seite 5, Zeile 3-8 - Zeile 20-23 * | 2-14 | |
| | * Seite 8, Zeile 3 - Zeile 6 * | | |
| | * Seite 9, Zeile 8 - Zeile 18 * | | |
| | * Seite 9, Zeile 22 - Seite 10, Zeile 7 * | | |
| | * Seite 10, Zeile 18 - Zeile 23 * | | |
| | * Seite 10, Zeile 27 - Seite 11, Zeile 6 * | | |
| | * Seite 11, Zeile 11 - Zeile 22 * | | |
| | * Seite 13, Zeile 1 - Zeile 4 * | | |
| | * Abbildungen 2,3 * | | |
| | * Ansprüche 9,10 * | | |
| | --- | | |
| Y | US 2002/078232 A1 (JAMIESON DWIGHT D ET AL) 20. Juni 2002 (2002-06-20) | 2-14 | |
| | * Spalte 4, Zeile 8 - Zeile 16 * | | |
| | * Spalte 8, Zeile 5 - Zeile 12 * | | |
| | * Spalte 9, Zeile 15 - Zeile 34 * | | |
| | --- | | |
| A | EP 1 168 714 A (ROCKWELL ELECTRONIC COMMERCE C) 2. Januar 2002 (2002-01-02) | 9-12 | RECHERCHIERTE SACHGEBIETE (Int.Cl.7) |
| | * Abbildung 1 * | | H04L |
| | * Spalte 3, Zeile 16 - Zeile 20 * | | |
| | * Spalte 3, Zeile 56 - Spalte 4, Zeile 15 * | | |
| | * Spalte 4, Zeile 35 - Zeile 45 * | | |
| | * Spalte 5, Zeile 43 - Zeile 46 * | | |
| | ----- | | |

Der vorliegende Recherchenbericht wurde für alle Patentansprüche erstellt

| Recherchenort | Abschlußdatum der Recherche | Prüfer |
|---|---|---|
| DEN HAAG | 10. März 2003 | Ngao, Y.S. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 02 01 9297

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

10-03-2003

| Im Recherchenbericht angeführtes Patentdokument | Datum der Veröffentlichung | Mitglied(er) der Patentfamilie | Datum der Veröffentlichung |
|---|---|---|---|
| WO 9921322 A | 29-04-1999 | US 6173411 B1<br>AU 1099099 A<br>EP 1025680 A2<br>WO 9921322 A2 | 09-01-2001<br>10-05-1999<br>09-08-2000<br>29-04-1999 |
| US 2002078232 A1 | 20-06-2002 | AU 1579402 A<br>WO 0251078 A2 | 01-07-2002<br>27-06-2002 |
| EP 1168714 A | 02-01-2002 | AU 4386501 A<br>CA 2344789 A1<br>EP 1168714 A2 | 03-01-2002<br>27-12-2001<br>02-01-2002 |

EPO FORM P0461

Für nähere Einzelheiten zu diesem Anhang : siehe Amtsblatt des Europäischen Patentamts, Nr.12/82